# EUROPEAN PATENT SPECIFICATION

(11) **EP 1 919 112 B1**
(45) Date of publication and mention of the grant of the patent: **29.07.2020**
(21) Application number: 05774482.3
(22) Date of filing: 18.08.2005
(51) Int. Cl.: H04M 3/42, H04W 8/18

(54) **A SYSTEM AND A METHOD FOR PLAYING COLORING RING BACK TONE BASED ON THE CALLED USER'S STATE PRESENCE INFORMATION**
SYSTEM UND VERFAHREN ZUM WIEDERGEBEN EINES FÄRBE-RÜCKRUFTONS AUF DER BASIS DER ZUSTANDSPRÄSENZINFORMATIONEN DES ANGERUFENEN BENUTZERS
SYSTEME ET METHODE D'EMISSION DE TONALITES DE RETOUR D'APPEL PERSONNALISEES EN FONCTION DE L'INFORMATION D'ETAT DE PRESENCE DE L'UTILISATEUR APPELE

(43) Date of publication of application: 07.05.2008
(73) Proprietor: ZTE Corporation, 518057 Shenzhen City, Guangdong Province (CN)
(72) Inventor: SHANG, Guoqiang, 518057 Shenzhen, Guangdong Province (CN); HU, Anbin, 518057 Shenzhen, Guangdong Province (CN); SUN, Jin, 518057 Shenzhen, Guangdong Province (CN)
(74) Representative: Baudler, Ron
(86) International application number: PCT/CN2005/001288
(87) International publication number: WO 2007/019729

(56) References cited:
- WO-A1-00/49793
- WO-A1-2004/021690
- WO-A1-2004/102940
- WO-A2-03/096709
- CN-A- 1 294 811
- CN-A- 1 335 015
- CN-A- 1 529 526
- CN-A- 1 625 194
- US-A- 5 539 809
- US-A1- 2005 159 146
- US-B1- 6 181 927

## Description

### Technical Field

The present invention relates to an application method for value-added services in the communication field (including mobile communication and wireline communication), and especially, relates to a system and a method for playing coloring ring back tone based on a user's presence information in the communication field.

### Background Art

Coloring ring back tone service is called as coloring ring back tone (short for CRBT) service, which refers to that after a called user conducts relevant setting, when other users make calls, before the called user (i.e. MT (Mobile Terminal)) answers the call, the system will play a piece of music, advertisement or the message left by the called user to a calling user (i.e. MO (Mobile Originate))according to the called user's relevant setting, and then what the calling user hears is no longer the dull ring back tone of "toot, toot" as we usually heard before, but the ring back tone set by the called user in the system, i.e., the coloring ring back tone. What needs to be pointed out is that those personalized coloring ring back tones are set by the called user in advance, which can be the ring or music provided by the system, or a voice document recorded by the called user through an intelligent network system in advance, or a voice document downloaded by the called user to the intelligent network system from the network in advance. Since the development of the coloring ring back tone service, it has been very popular with users, operators, content providers, service providers and solution settlement device providers devote a great amount of manpower and material resources to the service, which offers strong support to the service development, and raises a lot of valuable reference designs and solutions, and especially, the solutions, such as how to let users set their coloring ring back tones and what contents they can set, how to maximize the users' personalities and meanwhile pays attention to the realization of the operator's system such as how to effectively cooperate with the service provider and the content provider, are basically accepted by the operators and providers after repeated amendments and have been commercialized, and the good commercial effect renders the wide use of the coloring ring back tone service in the country. Not only the mobile operators deploy the coloring ring back tone service, the wireline operators also deploy the corresponding service, and even the personal handyphone system (short for PHS) is deployed with the coloring ring back tone service, so it can be seen that the value-added service is widely favored by users and operators.

Prior art document WO03096709 A2 discloses a system and related method for supporting non-intrusive and effective voice communication among mobile users in which voice calls between mobile users are managed based on callee availability, caller-callee relationships, and non-intrusive information exchange, including interactive exchange at the time of call setup but prior to the call being answered. Callee availability can be based on callee device status, calendar activities, location, past behavior and other factors. The caller-callee relationships specify whether the callee is available, unavailable or on restricted availability relative to the caller. The interactive exchange can be implemented using voice and/or text/graphic displays on caller and callee mobile device. Callees are provided with options for handling the call. Callers are provided with information regarding the callee's current and future availability and willingness to receive a voice call from the caller, thus maximizing the chance of caller reaching the callee on every voice call.

A prior art, WO2004102940A1 discloses a system and method for providing RBT in communication network, particularly, in the GSM network and the CDMA network. In its embodiments of the specification, the called MSC (T_MSC) pages the called terminal and transmits the presence information of the called terminal to the RBTS by ACM. Then, the RBTS judges whether current state of the called terminal is idle according to the ACM, wherein if yes, the RBTS plays the customized ring back tone; if no, such as the called terminal is in busy, power off or out of service area, the RBTS sends to the calling terminal the voice information which represents the called terminal being busy, power off or out of the service area.

Although this prior art provides a technical solution for providing RBT in communication network, it fails to meet the requirement of providing personalized service when using the RBT. With the development of the communication technology, especially the development of the technology and value-added services in mobile communication field, the network structure can support various kinds of value-added services, for example, the IP multimedia subsystem (short for IMS) is raised to integrate the prior networks in order to provide enough network capacity to support new value-added services. No matter the mobile operator or the wireline operator, both of them hope to improve their profits and the average revenue per user (short for ARPU) value through the value-added services, therefore, the saying of "service is the king" emerges. After several years' development, the coloring ring back tone service has been widely accepted, users hope to express their mood or feeling to a certain extent through the coloring ring back tone, and it is a non face-to-face expression manner. Just because of this characteristic, users love the coloring ring back tone service very much. Therefore, it becomes the key problem in developing the prior coloring ring back tone service and making more users accept the coloring ring back tone service that new attributes of the coloring ring back tone should be developed, lifecycle of the service should be extended, and innovative points be found.

### Summary of the Invention

The invention is defined in the independent claims.

Advantageous embodiments are set out in the dependent claims.

In view of the description in the above, the purpose of the present invention lies in providing a system and a method for playing coloring ring back tone based on a user's presence information in the communication field. In this new coloring ring back tone service, it needs to add a state presence server so as to fully play its potential for increasing the additional value of the coloring ring back tone service and enrich the coloring ring back tone service.

In order to achieve the above purpose, a system for playing coloring ring back tone based on the called user's presence information according to the present invention comprises the network element devices of: a home location register (short for HLR), a calling user's mobile switching center/visiting location register (short for MSC/VLR), a called user's MSC/VLR and a coloring ring back tone control server, wherein the HLR and the calling /called user's MSC/VLR are common network element devices in the communication center, characterized in further comprising a state presence server.

Wherein, said HLR is a user HLR in the mobile communication network, and it stores the personal information of the user, i.e., international mobile subscriber identity (short for IMSI), mobile station integrated services digital network (hereinafter short for MSISDN) number, personal information such as location and subscription information, etc.

The calling/called user's MSC/VLR accomplishes the functions, such as establishing a calling circuit, connecting, playing the ring back tone and disconnecting, in the process of making a call, and interacts information with the HLR through the signaling of the mobile intelligent network signaling protocol (CAMEL Application Part, hereinafter short for CAP), obtains the subscription information of the coloring service of the user, and triggers the coloring ring back tone service of the CRBT control server.

There is a physical connection channel and an information interactive interface between the CRBT control server and the state presence server.

Wherein, through the interaction of the CAP signaling with the calling/called user's MSC/VLR, the CRBT control server controls the user's calling process and accomplishes loading and performing the coloring ring back tone service logic, storing, inquiring and modifying the CRBT user data, etc. The coloring ring back tone service can address a home independent peripheral (short for IP) according to the ring back tone information set by users, and realize the play of a certain ring back tone.

The state presence server is mainly used to obtain and provide the dynamic information of CRBT users or devices and accomplish the integrated application with the CRBT control server, wherein the dynamic information of the CRBT users or devices comprises the presence information, location information and capabilities and preference information, etc.

In order to achieve the above purpose, the method for playing coloring ring back tone based on a user's presence information according to the present invention comprises the following steps:
step 1: providing a construction state presence server in a communication system which includes a CRBT control server, wherein the state presence server is constructed according to the standards such as the open mobile alliance (short for OMA);
step 2: establishing a physical connection channel and defining an information interactive interface between the CRBT control server and the state presence server;
step 3: the CRBT control server obtaining the called user's current presence information by interacting the information above-mentioned through the information interactive interface; and
step 4: the CRBT control server playing the corresponding CRBT based on the called user's current presence information and corresponding subscription information of the coloring ring back tone service, when the user is called.

Wherein, the precondition for realizing the method is that the called user has applied to the operator for the coloring ring back tone service and a state presence service and set CRBTs in different state presences.

In the step 3, the CRBT control server can obtain the called user's current presence information by the way of making an inquiry or being informed by the state presence server.

By adopting the system and the method according to the present invention, the CRBT control server can play the CRBT based on the playing priority defined by the called user, such as playing coloring ring back tones based on the state presence, based on the calling number, and based on the default ring back tone, in this order.

In order to make the said and other purposes, features and advantages of the present invention more clearly and easier to be understood, embodiments are given below to describe the present invention in detail in conjunction with the accompanying drawings of the Description.

### Brief Description of the Accompanying Drawings

Figure 1 is a block diagram illustrating the system according to the present invention; and
Figure 2 is a simplified flow chart illustrating the method according to the present invention.

### Embodiments for Carrying Out the Present Invention

The following is a further detailed description of the present invention in conjunction with the accompanying drawings and embodiments.

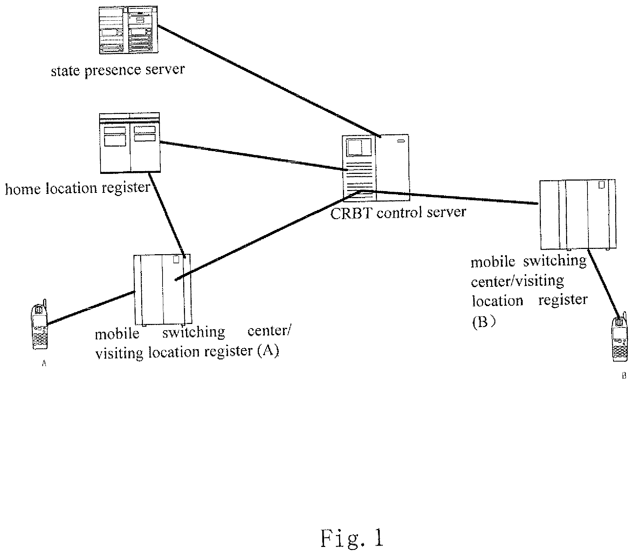

Figure 1 is a block diagram illustrating the system according to the present invention. As shown in figure 1, the system for playing coloring ring back tone based on a user's presence information according to the present invention comprises network element devices of: a HLR, a calling user's MSC/VLR, a called user's MSC/VLR, a coloring ring back tone control server and a state presence server, wherein the HLR and the calling/called user's MSC/VLR are the common network element devices in a communication network center.

Wherein, the HLR is a user HLR in the mobile communication network, and is used for storing the user's personal information, i.e., personal information such as the IMSI, MSISDN, location and subscription service, and it can conduct the interaction of the mobile application part (short for MAP) and CAP signaling with the MSC, CRBT control server, and the like, and can also provide multiple functions such as location inquiry and subscription information inquiry.

The calling/called user's MSC/VLR is used for accomplishing functions such as establishing a calling circuit, connecting the calling circuit, playing the coloring ring back tone and disconnecting the calling circuit, and it interacts information with the HLR through the CAP signaling, obtains the user's subscription information of the coloring ring back tone service, thus triggering the coloring ring back tone service of the CRBT control server.

The CRBT control server controls the user's calling process through the interaction of the CAP signaling with the calling/called user's MSC/VLR; when the MSC triggers the coloring ring back tone service, the CRBT control server interacts information with the HLR through the CAP signaling, obtains the user information in the HLR, provides necessary data for further procession of the coloring ring back tone service, and accomplishes loading and performing the coloring ring back tone service logic, and storing, inquiring and modifying the CRBT user's data. The coloring ring back tone service can address the home IP according to the ring back tone information set by users, thus realizing playing the specific ring back tone.

The state presence server is mainly used to obtain and provide the dynamic information (information such as the presence information, location information and capabilities and preference information) of CRBT users or devices and to accomplish the integrated application (such as the push to talk over cellular (short for PoC) service, instant message (short for IM) service, mobile game, and group management, etc.) with other service application servers. In the present invention, the state presence server is integrated with the CRBT control server, and provides the user's current information through interacting signalings, as well as provides necessary information for the CRBT control server to play the CRBT based on the user's subscription information.

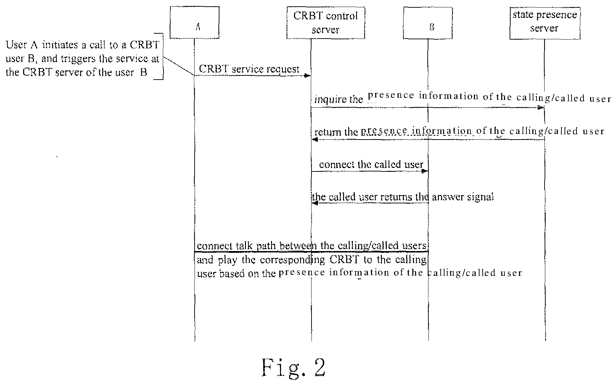

Figure 2 is a simplified signaling flow chart of the method according to the present invention, and it describes the simplified signaling process when a user A (a calling user) makes a call with a user B (a called user) in a normal flow. As shown in figure 2, when the user A initiates a call, after a series of signaling interaction with the calling/called user's MSC/VLR and HLR, the CRBT control server is triggered, and then the CRBT control server sends a state request to the state presence server, the state presence server responds to the request and returns information, and then the CRBT control server plays the corresponding CRBT based on the returned information.

In conjunction with figure 1 and figure 2, the method for playing coloring ring back tone based on a user's presence information comprises the following steps:
step 1: providing a construction state presence server in a communication system which includes a CRBT control server, wherein the state presence server can be constructed according to the standards such as the OMA; step 2: establishing a physical connection channel and defining an information interactive interface between the CRBT control server and the state presence server;
   the information interactive interface is an interface for information interaction between the state presence server and the CRBT control server, through the interface, the CRBT control server can inquire the corresponding user's presence information, or the state presence server can inform the CRBT control server of the user's presence information; if the CRBT control server sends a request command P2Req(x) to the state presence server through the interface, the state presence server sends a request response P2Ack(x, y), wherein, x represents the user identification code, y represents the user's current presence information, and the presence information characteristic code is in conformity with the state presence service standard;
step 3: the CRBT control server conducting information interaction through the information interactive interface and obtaining the called user's current presence information;
   wherein, the CRBT control server can obtain the called user's current presence information by the way of inquiring or being informed by the state presence server; and
step 4: the CRBT control server playing the corresponding CRBT based on the user's current presence information and the corresponding subscription information of the coloring ring back tone service, when the user is called.

As shown in figure 2, when the user A initiates a call to the user B and the user B is in the standby state, the user A can hear the CRBT set by the user B.

Wherein, the precondition for realizing the method is that the called user, such as the user B shown in Figure 2, applies to the operator for the coloring ring back tone service and the state presence service and sets CRBTs in different state presences.

The above is a detailed description of the working principle of the present invention.

## Claims

1. A system for playing a coloring ring back tone, comprising network element devices of: a home location register, a calling user's mobile switching center/visiting location register, a called user's mobile switching center/visiting location register, a state presence server, and a coloring ring back tone control server, wherein the home location register and the calling/called user's mobile switching center/visiting location register are common network element devices in a communication center, wherein there are a physical connection channel and an information interactive interface between the coloring ring back tone control server and the state presence server, wherein the coloring ring back tone control server is configured to obtain the called user's current presence information by interacting information through the information interactive interface, **characterized in that** the coloring ring back tone control server is configured to play the coloring ring back tone based on a playing priority defined by the called user; the playing priority having the following order to play the coloring ring back tones: based on the called user's current presence information, based on the calling number, and based on the default ring back tone.

2. The system according to claim 1, **characterized in that** the home location register is the called user's home location register in the mobile communication network, and the home location register stores a personal information of the called user, the personal information of the called user includes international mobile user identity, mobile station integrated service digital network number, location and subscription service.

3. The system according to claim 1 or 2, **characterized in that** the calling/called user's mobile switching center/visiting location register is configured to establish a calling circuit, to connect the calling circuit, to play the coloring ring back tone and to disconnect the calling circuit during calling, to interact information with the home location register through the signaling of the mobile Intelligent Network protocol, to obtain the called user's subscription information of the coloring ring back tone service, and to trigger the coloring ring back tone service at the coloring ring back tone control server.

4. The system according to claim 3, **characterized in that** the coloring ring back tone control server is configured to control the called user's calling process and to load and to perform a coloring ring back tone service logic, to store, to inquire, and to modify the coloring ring back tone user's data, through the interaction of the signaling of the mobile Intelligent Network protocol with the calling/called user's mobile switching center/visiting location register.

5. A method for playing a coloring ring back tone in a system according to any one of claims 1 to 4, comprising the following steps:
step 1: the coloring ring back tone control server obtaining the called user's current presence information by interacting information through the information interactive interface; and
step 2: the coloring ring back tone control server playing a corresponding coloring ring back tone based on the called user's current presence information and corresponding subscription information of the coloring ring back tone service, when the called user is called, wherein the information interactive interface is set in the following manner: setting up the state presence server in the communication system which includes the coloring ring back tone control server, wherein the state presence server is set according to the standard of open mobile alliance and establishing the physical connection channel and defining the information interactive interface between the coloring ring back tone control server and the state presence server; **characterized in that** the coloring ring back tone control server plays the coloring ring back tone based on a playing priority defined by the called user; the playing priority having the following order to play the coloring ring back tones: based on the called user's current presence information, based on the calling number, and based on the default ring back tone.

6. The method according to claim 5, **characterized in that** the precondition for realizing the method is that the called user applies to the operator for a coloring ring back tone service and a state presence service and sets the coloring ring back tones in different state presences.

7. The method according to claim 5 or 6, **characterized in that**, in the step 1, the coloring ring back tone control server can obtain the called user's current presence information by the way of inquiring or being informed by the state presence server.

## Patentansprüche

1. System zum Abspielen eines farbigen Freizeichentons, bestehend aus Netzelementvorrichtungen von: ein Heimatregister, ein Mobilvermittlungszentrum/Besucherregister eines anrufenden Teilnehmers, ein Mobilvermittlungszentrum/Besucherregister eines angerufenen Teilnehmers, ein Zustandspräsenzserver und ein Server zur Steuerung des farbigen Freizeichentons, wobei das Heimatregister und das Mobilvermittlungszentrum/Besucherregister des anrufenden/angerufenen Teilnehmers gemeinsame Netzelementvorrichtungen in einem Kommunikationszentrum sind, wobei ein physikalischer Verbindungskanal und eine interaktive Informationsschnittstelle zwischen dem Server für die Steuerung des farbigen Freizeichentons und dem Zustandspräsenzserver vorhanden sind, wobei der Server für die Steuerung des farbigen Freizeichentons so konfiguriert ist, dass er die aktuellen Präsenzinformationen des angerufenen Benutzers erhält, indem er über die interaktive Informationsschnittstelle Informationen interaktiv austauscht, **dadurch gekennzeichnet, dass** der Server für die Steuerung des farbigen Freizeichentons so konfiguriert ist, dass er den farbigen Freizeichenton auf der Grundlage einer vom angerufenen Benutzer definierten Abspielpriorität abspielt; wobei die Spielpriorität die folgende Reihenfolge hat, um die farbigen Freizeichentöne abzuspielen: auf der Grundlage der aktuellen Präsenzinformationen des angerufenen Benutzers, auf der Grundlage der anrufenden Nummer und auf der Grundlage des Standard-Freizeichentons.

2. System nach Anspruch 1, **dadurch gekennzeichnet, dass** das Heimatregister das Heimatregister des angerufenen Benutzers im Mobilkommunikationsnetz ist, und das Heimatregister eine persönliche Information des angerufenen Benutzers speichert, wobei die persönliche Information des angerufenen Benutzers die internationale mobile Benutzeridentität, die Nummer des diensteintegrierenden digitalen Mobilfunknetzes, den Standort und den Abonnementservice umfasst.

3. System nach Anspruch 1 oder 2, **dadurch gekennzeichnet, dass** das Mobilvermittlungszentrum/Besucherregister des anrufenden/angerufenen Benutzers so konfiguriert ist, dass es eine Rufleitung aufbaut, die Rufleitung verbindet, den farbigen Freizeichenton abspielt und die Rufleitung während des Anrufs trennt, Informationen mit dem Heimatregister durch die Signalübertragung des mobilen intelligenten Netzprotokolls interagiert, die Abonnementinformationen des angerufenen Benutzers für den farbigen Freizeichenton-Service erhält und den farbigen Freizeichenton-Service am Server zur Steuerung des farbigen Freizeichentons auslöst.

4. System nach Anspruch 3, **dadurch gekennzeichnet, dass** der Server zur Steuerung des farbigen Freizeichentons so konfiguriert ist, dass er den Anrufprozess des angerufenen Benutzers steuert und eine farbige Freizeichenton-Servicelogik lädt und ausführt, die Daten des Benutzers des farbigen Freizeichentons speichert, abfragt und modifiziert, und zwar durch die Interaktion der Signalübertragung des mobilen intelligenten Netzprotokolls mit der Mobilvermittlungsstelle/dem Besucherregister des anrufenden/angeforderten Benutzers.

5. Verfahren zum Abspielen eines farbigen Freizeichentons in einem System nach einem der Ansprüche 1 bis 4, umfassend die folgenden Schritte:
Schritt 1: Der Server für die Steuerung des farbigen Freizeichentons erhält die aktuellen Anwesenheitsinformationen des angerufenen Benutzers, indem er über die interaktive Informationsschnittstelle mit Informationen interagiert; und
Schritt 2: Der Server zur Steuerung des farbigen Freizeichentons spielt einen entsprechenden farbigen Freizeichenton auf der Grundlage der aktuellen Anwesenheitsinformationen des angerufenen Benutzers und der entsprechenden Abonnementinformationen des farbigen Freizeichenton-Service ab, wenn der angerufene Benutzer angerufen wird, wobei die interaktive Informationsschnittstelle auf die folgende Weise eingestellt wird:
Einrichten des Zustandspräsenzservers in dem Kommunikationssystem, das den Server zur Steuerung des farbigen Freizeichentons enthält, wobei der Zustandspräsenzserver gemäß dem Standard der Open Mobile Alliance eingestellt wird und den physikalischen Verbindungskanal herstellt und die interaktive Informationsschnittstelle zwischen dem Server zur Steuerung des farbigen Freizeichentons und dem Zustandspräsenzserver definiert, **dadurch gekennzeichnet, dass** der Server zur Steuerung des farbigen Freizeichentons den farbigen Freizeichenton auf der Grundlage einer vom angerufenen Benutzer definierten Abspielpriorität abspielt; wobei die Abspielpriorität die folgende Reihenfolge hat, um die farbigen Freizeichentöne abzuspielen: auf der Grundlage der aktuellen Präsenzinformationen des angerufenen Benutzers, auf der Grundlage der anrufenden Nummer und auf der Grundlage des Standard-Freizeichentons.

6. Verfahren nach Anspruch 5, **dadurch gekennzeichnet, dass** die Voraussetzung für die Realisierung des Verfahrens darin besteht, dass der angerufene Benutzer bei dem Betreiber einen farbigen Freizeichenton-Service und einen Zustandspräsenz-Service beantragt und die farbigen Freizeichentöne in verschiedenen Zustandspräsenzen einstellt.

7. Verfahren nach Anspruch 5 oder 6, **dadurch gekennzeichnet, dass** in Schritt 1 der Server für die Steuerung des farbigen Freizeichentons die aktuelle Präsenzinformation des angerufenen Benutzers auf dem Wege der Abfrage oder Information durch den Zustandspräsenzserver erhalten kann.

## Revendications

1. Système permettant de jouer une sonnerie de retour colorée, comprenant des dispositifs d'éléments de réseau de: un registre de localisation du domicile, un registre de localisation du centre de commutation mobile de l'utilisateur appelant/visiteur, un registre de localisation du centre de commutation mobile de l'utilisateur appelé/visiteur, un serveur de présence d'état et un serveur de contrôle de sonnerie de retour colorée, dans lequel le registre de localisation du domicile et le registre de localisation du centre de commutation mobile de l'utilisateur appelant/appelé/visiteur sont des dispositifs d'éléments de réseau communs dans un centre de communication, dans lequel il y a un canal de connexion physique et une interface interactive d'informations entre le serveur de contrôle de la sonnerie de retour colorée et le serveur de présence d'état, dans lequel le serveur de contrôle de la sonnerie de retour colorée est configuré pour obtenir les informations de présence actuelles de l'utilisateur appelé en interagissant avec les informations par l'intermédiaire de l'interface interactive d'informations, **caractérisé en ce que** le serveur de contrôle de la sonnerie de retour colorée est configuré pour jouer la sonnerie de retour colorée sur la base d'une priorité de lecture définie par l'utilisateur appelé; la priorité de jeu ayant l'ordre suivant pour jouer les sonneries de retour colorée: sur la base des informations de présence actuelles de l'utilisateur appelé, sur la base du numéro d'appel et sur la base de la sonnerie de retour standard.

2. Système selon la revendication 1, **caractérisé en ce que** le registre de localisation du domicile est le registre de localisation du domicile de l'utilisateur appelé dans le réseau de communication mobile, et le registre de localisation du domicile stocke une information personnelle de l'utilisateur appelé, l'information personnelle de l'utilisateur appelé comprend l'identité internationale de l'utilisateur mobile, le numéro de réseau numérique à intégration de services de station mobile, la localisation et le service d'abonnement.

3. Système selon la revendication 1 ou 2, **caractérisé en ce que** le centre de commutation mobile de l'utilisateur appelant/appelé/registre de localisation des visiteurs est configuré pour établir un circuit d'appel, pour connecter le circuit d'appel, pour reproduire la sonnerie de retour colorée et pour déconnecter le circuit d'appel pendant l'appel, pour interagir avec les informations du registre de localisation de l'utilisateur par la signalisation du protocole de réseau intelligent mobile, pour obtenir les informations d'abonnement de l'utilisateur appelé au service de la sonnerie de retour colorée, et pour déclencher le service de la sonnerie de retour colorée au niveau du serveur de contrôle de la sonnerie de retour colorée.

4. Système selon la revendication 3, **caractérisé en ce que** le serveur de contrôle de la sonnerie de retour colorée est configuré pour contrôler le processus d'appel de l'utilisateur appelé et pour charger et exécuter une logique de service de la sonnerie de retour colorée, pour stocker, interroger et modifier les données de l'utilisateur de la sonnerie de retour colorée, par l'interaction de la signalisation du protocole de réseau intelligent mobile avec le centre de commutation mobile/registre de localisation de l'utilisateur appelé/appelé.

5. Procédé pour jouer une sonnerie de retour colorée dans un système selon l'une quelconque des revendications 1 à 4, comprenant les étapes suivantes:
étape 1: le serveur de contrôle de la sonnerie de retour colorée obtient les informations sur la présence actuelle de l'utilisateur appelé en interagissant avec les informations par le biais de l'interface interactive d'information
étape 2: le serveur de contrôle des sonneries de retour colorées joue une sonnerie de retour colorée correspondante basée sur les informations de présence actuelle de l'utilisateur appelé et les informations d'abonnement correspondantes du service des sonnerie de retour colorées, lorsque l'utilisateur appelé est appelé, dans lequel l'interface interactive d'informations est définie de la manière suivante: la mise en place du serveur de présence d'état dans le système de communication qui comprend le serveur de contrôle des sonneries de retour colorées, dans lequel le serveur de présence d'état est défini selon la norme d'alliance mobile ouverte et l'établissement du canal de connexion physique et la définition de l'interface interactive d'informations entre le serveur de contrôle des sonneries de retour colorées et le serveur de présence d'état, **caractérisé en ce que** le serveur de contrôle des sonneries de retour colorées joue la sonnerie de retour colorée sur la base d'une priorité de lecture définie par l'utilisateur appelé ; la priorité de lecture ayant l'ordre suivant pour jouer les sonneries de retour colorées: sur la base des informations de présence actuelles de l'utilisateur appelé, sur la base du numéro d'appel et sur la base de la sonnerie de retour standard.

6. Méthode selon la revendication 5, **caractérisée en ce que** la condition préalable à la réalisation de la méthode est que l'utilisateur appelé s'adresse à l'opérateur pour un service des sonneries de retour colorées et un service de présence d'état et qu'il règle les sonneries de retour colorées dans différentes présences d'état.

7. Méthode selon la revendication 5 ou 6, **caractérisée en ce que**, à l'étape 1, le serveur de contrôle des sonneries de retour colorées peut obtenir l'information de présence actuelle de l'utilisateur appelé en demandant ou en étant informé par le serveur de présence d'état.
